# EUROPEAN PATENT APPLICATION

(11) **EP 4 643 645 A1**
(43) Date of publication of application: **05.11.2025**
(21) Application number: 24382485.1
(22) Date of filing: 03.05.2024
(51) Int. Cl.: A22C 11/12

(54) **A MACHINE FOR TYING SAUSAGE PRODUCTS**

(71) Applicant: A. Lorenzo Barroso, S.A., 08310 Argentona (ES)
(72) Inventor: LORENZO NOGUERA, Sagar, 08302 MATARÓ (ES)
(74) Representative: ABG Intellectual Property Law, S.L.

(57) **Abstract**

The invention relates to a machine (100, 101) for tying sausages that comprises a knot-tying device (10), supply means (60) for supplying a string (21) and cutting means (30), the machine being characterised in that the knot-tying device has two simultaneously operable knot-tying mechanisms, each capable of tying a knot around a sausage (4), in that the string supply means (60) are operable to provide a segment of string sufficient for tying the two knots, and in that the cutting means comprise at least one first string cutting tool (32) configured to cut the segment of string between the two tied knots at a first point.

## Description

### Technical field of the invention

In the field of making sausages or the like, knot-tying machines are used to automatically tie sausage products. Specifically, a knot is tied with a string on an end portion of the casing within which a food material, conforming, for example, a sausage or the like, is stuffed. The invention relates to a knot-tying machine of this type.

### Background of the invention

Patent document ES 0475086 discloses a method and a knot-tying machine suitable for tying sausage products, specifically for tying a knot on a portion of an empty casing or a casing containing a bit of sausage.

Said method starts with a portion of a string arranged to form a simple oblong loop. The knot-tying machine has a receiving area where the portion of sausage to be tied is arranged transversely to the curl of the loop and, firmly holding the portions of the string on both sides of the loop, the method comprises completely surrounding with the loop the area of the sausage to be tied, passing and introducing the head of the curl of the loop inside the curl itself between the intersection of the string and the sausage in order to subsequently pull said head of the curl, forming a knot that tightly closes on the sausage, the head of the curl defining a protruding bow.

To implement this method, the solution of supplying the knot-tying machine with a load having a continuous string arranged on a support forming successive loops is known, so that the machine will cut the string to separate the successive portions of the string, each one comprising a curl of the loop and corresponding crossed end portions, which will be used in each knot-tying operation. Patent document ES 0239489 and Utility Model document ES 1246957 describe two loads of this type, consisting of a support formed by a sheet or band, which may be made of paper, on one side of which a string is arranged forming multiple simple loops, or in a figure eight, with intersections of the string close to a first edge of the sheet.

Several holes are made in each loop, said holes being transversely aligned in the sheet and intended to be passed through by a fork of the knot-tying machine, to manipulate the string and especially the head of the curl of the loop when the knot is being formed, as well as to allow the forward movement, by mechanical engaging, of the support sheet of the string as string is needed to perform the corresponding knot-tying operations.

Patent document ES 2154949 discloses a knot-tying machine that, instead of being fed with a continuous string with already formed loops, has means to allow string coming from a spool to be fed with an advancing mechanism and means for forming a simple loop in situ, from which a knot will be tied in a manner similar to the manner explained above.

Knot-tying machines of this type are used, for example, in sausage or sausage product production lines in which a string of sausage portions is supplied to a knot-tying machine, in which product-filled casing portions alternate with partially or sufficiently empty stuffed-product casing portions that can be obtained, for example, by twisting the casing on itself.

In one manner of proceeding, an operator places an empty casing portion each time in the receiving area of the knot-tying machine to tie a knot on it and subsequently cut the casing, separating the end of a finished product with a tied end and the start of another product with an end closed by tightening. Consequently, the resulting product is a sausage or sausage product with two opposite ends closed by tightening the casing, but where one of said ends has been tied by the string, which can advantageously be used to hang the product in a curing phase thereof, prior to it being placed on the market.

An objective of the invention is a knot-tying machine that increases productivity, as well as the versatility of lines of this type.

Another manner of proceeding, which may be of interest for products that weigh more or have greater pressure of food material stuffed inside the casing and for those where closing one end of the product by only twisting the casing is insufficient, would consist of tying two knots very close to each other along the same longitudinal portion of empty casing and then cutting the casing between said knots, repeating this action on the sausage in another longitudinal portion of empty casing separated from the previous portion by a distance equivalent to the distance that the sausage product is to have. This manner of proceeding then requires following a sequence of operations that comprises tying the first knot at a first end of a first longitudinal portion of empty casing; moving the sausage a distance approximately the length of said first longitudinal portion of empty casing; tying a second knot at the second end of the first longitudinal portion of empty casing; moving the sausage a distance equivalent to the desired distance for the sausage product coinciding with the first end of a second longitudinal portion of empty casing and tying a third knot; moving the sausage a distance approximately the length of said second longitudinal portion of empty casing; and tying a fourth knot at the second end of the second longitudinal portion of empty casing. The resulting product is a sausage or sausage product with its two opposite ends closed by tightening the casing and on which a knot has been tied with string.

Another objective of the invention is a knot-tying machine that allows this type of sausage product to be obtained in a safer and more efficient way, reducing operating times.

### Description of the invention

The inventors have envisaged a production line for sausage products tied at only one end in which the sausages are finished opposite one another in pairs. In other words, the operation of tying two knots very close together and at the same time on a sausage is envisaged, which will allow two sausage products to be completed at the same time with a single stroke of the machine.

To this end, a machine for tying sausage products according to claim 1 is proposed.

The machine comprises a knot-tying device, supply means for supplying a string and cutting means, the machine being characterised in that the knot-tying device has two simultaneously operable knot-tying mechanisms, each capable of tying a knot around a sausage, in that the string supply means are operable to provide a segment of string sufficient for tying the two knots, and in that the cutting means comprise at least one first string cutting tool, configured to cut the segment of string between the two tied knots.

By operating the knot-tying mechanisms simultaneously, two sausage products, of the type tied at only one end, can be finished with the same stroke of the machine. This significantly increases the production system compared to lines that use knot-tying machines that tie a single knot each time and also have to first move the entire length of a sausage product in order to tie the knot that will be located at one end.

Likewise, the machine may be used in other production lines to, for example, obtain sausage products of the type with both ends tied without necessarily having to move the sausage to tie two knots at opposite ends of the same longitudinal portion of empty casing, as would have been the case when using a knot-tying machine of the known type. In fact, with a single stroke of the machine, as explained later, two knots can be tied simultaneously and both the string used and the sausage between the newly tied knots can be cut.

The phrase "simultaneously operable" in reference to the two knot-tying mechanisms should be understood as also being able to be operated individually, and even operating only one of the knot-tying mechanisms if desired.

Consequently, if it were of interest, the machine could tie a single knot each time.

In the context of the present invention, the term "sausage" is used to refer to a portion of indefinite length of a casing with stuffed content; and the term "sausage product" refers to a portion of commercial length in sausage format or the like of the casing with stuffed content and with at least one constricted and tied end.

The invention envisages using a single supply of string, specifically feeding the two knot-tying mechanisms with the same segment of string but having sufficient length to tie two knots. In other words, string is not fed separately to two knot-tying mechanisms that, due to their necessary proximity, should be fed in a way the two strings follow opposite feed directions, which has obvious advantages.

As explained later, this makes possible to have a much more compact and easy-to-operate machine, since in some way the knot-tying device of a conventional machine is duplicated, providing it with two knot-tying mechanisms and offering the option of not having to duplicate the string supply means and/or the cutting means, specifically doubling the number of string cutting tools as will be explained later.

In a variant of the invention, the knot-tying mechanisms implement a known knot-tying technique and each mechanism comprises a pusher and a matching fork, both able to be moved and actuated in order to move in a sequence from a standby position to an operating position and back again to the standby position, as also explained in more detail later.

In an embodiment, the pushers of the two knot-tying mechanisms are firmly connected to move in unison and, optionally but preferably, they may be configured to retain the sausage product against a support surface when the pushers take the operating position; and even more preferably, they may comprise sausage tightening means when the pushers take the operating position.

The tightening means have the purpose of emptying the content of the sausage casing, whether made of natural or synthetic casing, in those portions on which the knots will be tied. Otherwise, the action of tying knots and especially cinching them could increase the internal pressure of the stuffed product to such an extent that it could cause said casing to break.

With this measure, if desired, the knot-tying machine can tie knots on a sausage without the need for said sausage to be provided with longitudinal portions of empty casing. For example, having to perform twisting operations on the sausage itself prior to providing the sausage to the knot-tying machine is avoided.

In the sausage closing technique, tightening means are already known. Stapling machines, for example, already incorporate tightening means with movable parts that first constrict the casing at nearby points and then move in the opposite direction and longitudinally with respect to the sausage in order to run the stuffed content inside the casing, creating a longitudinal portion of empty casing.

In an embodiment of the invention, which avoids complex mechanisms with movable parts of this type, the sausage tightening means comprise tightening parts, which travel with the pushers, which have respective engaging surfaces configured to gradually gather the sausage casing into contact with said engaging surfaces, moving stuffed content when the pushers are actuated towards their operating position.

Advantageously, by taking advantage of the movement of the pushers, it will also be possible to obtain a portion of casing sufficiently empty of stuffed content so that the action of tying knots does not cause the casing to break, and without requiring movable parts that move longitudinally with respect to the sausage.

In a preferred embodiment, the tightening means comprise a number of four tightening parts, two inner ones located between the forks and two outer ones each on an opposite side of the set of forks.

In a particular variant of interest, the engaging surface of the inner tightening parts is different from the engaging surface of the outer tightening parts.

The invention also contemplates that the knot-tying machine comprises a threading device, with a rod divided into two portions, a fixed rod portion and a movable rod portion, where the movable rod portion can be actuated between a standby position, sufficiently separated from the fixed rod portion so as not to interfere with the knot-tying mechanisms of the knot-tying device when tying knots, and a connection position, which connects to the fixed rod portion to give continuity to the rod passing through and threading at least one protruding bow of the tied knots as it moves towards the connection position.

The fixed rod portion may be connected to a hanging bar.

In a variant of the machine equipped with the threading device, the threading device comprises removable separators configured to sufficiently open the protruding bows of the knot or knots to be threaded.

As explained later, threading allows the recently tied sausages to be delivered automatically to a hanger with a hanging bar and makes it possible to choose which bow or bows of the recently tied knots will be used to hang the sausage products from the hanger.

In a variant of the machine, the cutting means comprise, in addition to the first string cutting tool, a second string cutting tool configured to cut the segment of string between the two tied knots at a second point; a third string cutting tool configured to cut the string at a third point that separates the segment of string used for tying the two knots from a store of continuous string; and a sausage cutting tool configured to cut the sausage at a point located between the first and second cutting points of the string.

In an alternative variant, cutting the string at a single point between the tied knots is envisaged, where the first string cutting tool between the two tied knots is sufficient to carry this out and it can be done without a second string cutting tool between the two tied knots.

The machine of the invention is suitable for tying two knots by supplying a segment of string having sufficient length for this purpose.

In a variant, the machine is particularly suitable for tying the two knots from successive segments of string with already formed loops, which makes the machine more compact since an operation required for tying the knots is already carried out beforehand.

In accordance with this capacity, another aspect of the invention relates to a system that combines a machine according to the invention with a load of string consisting of a flexible sheet on which the string is arranged forming consecutive loops interspaced according to the distance that separates the two knot-tying mechanisms of the knot-tying device of the machine.

In a variant of the system, the string supply means comprise in the machine a drive wheel that engages with the flexible sheet on which the string forming loops is placed, where the drive of the drive wheel for each stroke of the machine is sufficient to place a portion of sheet with a segment of string that contains two consecutive loops interspaced according to the distance that separates the two knot-tying mechanisms of the machine.

In a variant of the system, the string supply means of the machine comprise a drive wheel that engages with the flexible sheet on which the string forming loops is arranged, where the drive wheel operable with each stroke of the machine is sufficient to place a portion of sheet with a segment of string that contains two consecutive loops within reach of the knot-tying mechanisms of the machine, and where appropriate, within reach of the forks of said knot-tying mechanisms.

### Brief description of the drawings

Figure 1a shows a knot-tying device of a first variant of a machine according to the invention with two knot-tying mechanisms, each with a pusher and a matching fork, in a standby position.
Figure 1b shows the same knot-tying device as in Figure 1a but with the pushers and the matching forks in an operating position.
Figure 2 shows a knot that the machine is capable of tying.
Figure 3 shows a load of string that can be used by the machine in Figure 1 to tie knots.
Figure 4 is a detail of the two pushers of the machine in Figure 1, which are firmly connected in the specific example.
Figure 5 shows the two pushers of the machine in Figure 1 in an operating position;
Figures 6 to 11 help to better understand how a knot-tying sequence is carried out, although the depicted parts of the knot-tying mechanisms do not necessarily take the relative positions shown in the drawings. In these Figures:

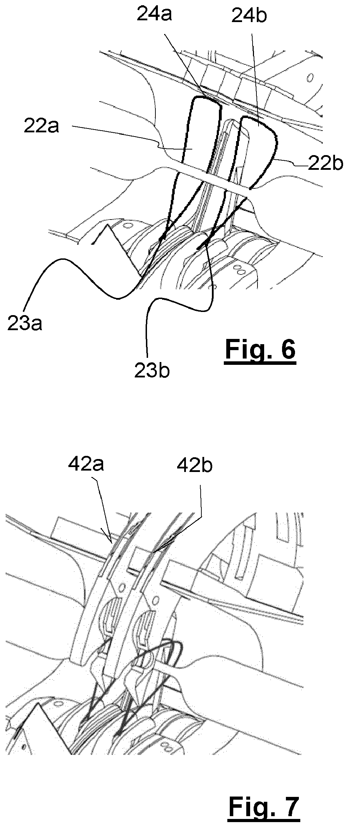

   Figure 6 aims to show the effect that the pushers will have on the sausage when they take their operating position and the arrangement of the string with respect to the sausage at the beginning of a knot-tying sequence;
   Figure 7 shows an instant of the knot-tying sequence and specifically how the movement of the forks towards their operating position causes the head of the curls of respective loops of the string to be pulled in order to surround with said string a portion of sausage that is likewise oppressed by the pushers of the knot-tying mechanisms;

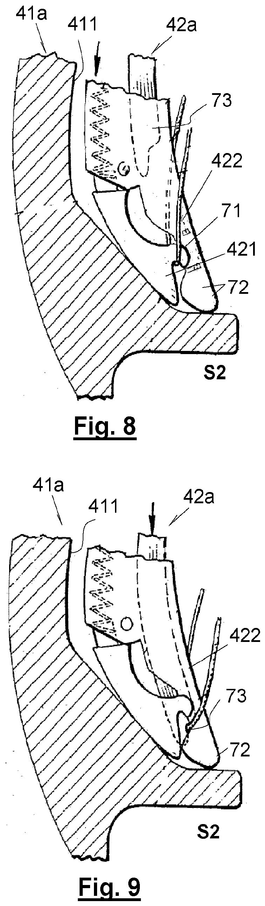

   Figures 8 and 9 schematically show how the curl of a string is transferred between the outer and inner arms of a fork when a pusher and the matching fork take their operating position;

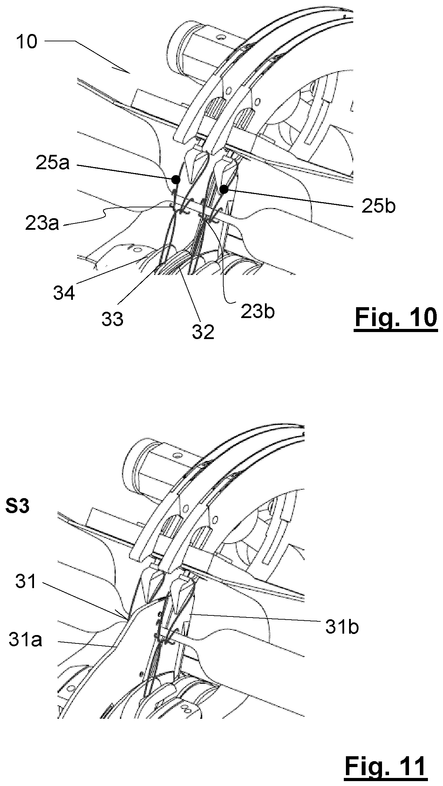

   Figure 10 shows an instant of the knot-tying sequence and specifically how the forks, in their movement back towards their standby position, pull the heads of respective curls to cinch respective knots around the sausage; and
   Figure 11 shows the cut of the segment of string and of the sausage between two recently tied knots.

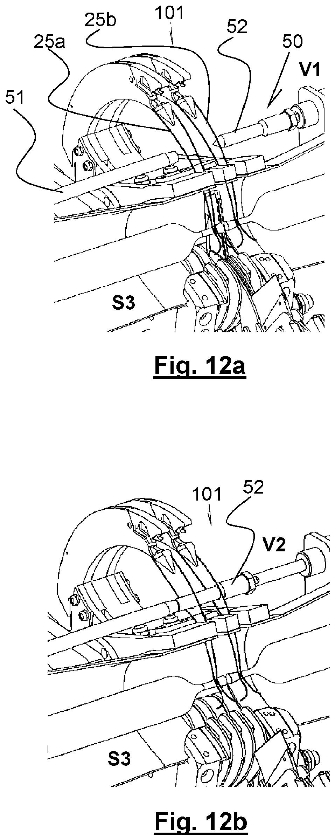

   Figures 12a and 12b show the knot-tying device of a second variant of a machine according to the invention with its two knot-tying mechanisms in a standby position, at the end of a knot-tying sequence, where the machine is equipped with a threading device that is shown in two different positions.

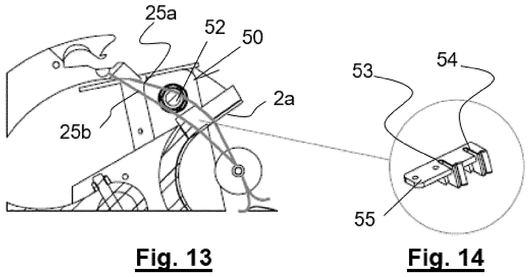

   Figure 13 shows the location and effect of a separator on a bow of a recently tied knot.
   Figure 14 exemplifies a separator.

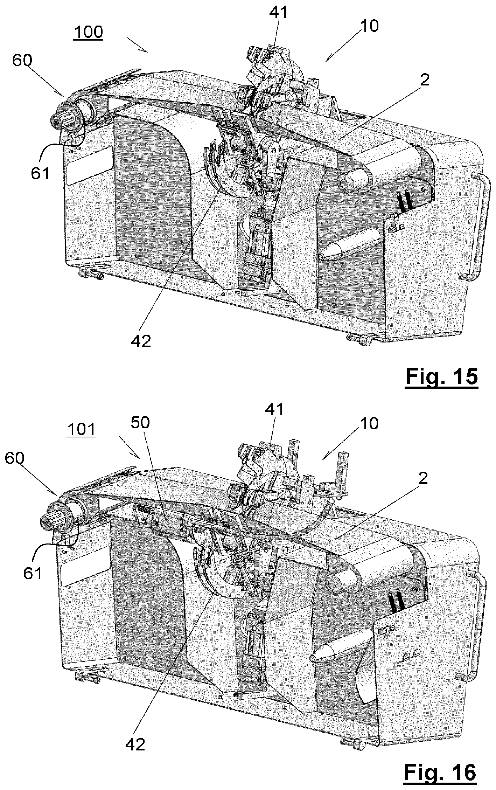

   Figures 15 and 16 are respective complete views of the first and second variants of a machine according to the invention.

### Detailed description of the invention

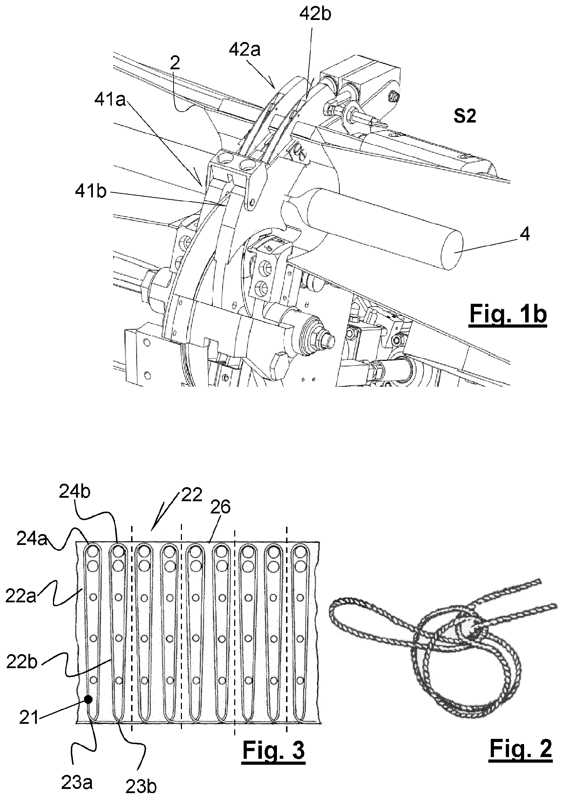

Figure 3 shows a load 22 of string 21 consisting of a support in the form of a sheet 26 or band, made of paper or similar, on one side of which a store of continuous string 21 is arranged, forming multiple closed simple oblong loops transverse to the sheet and in succession, with the intersections 23a, 23b of the string close to a first edge of the sheet and with the heads 24a, 24b of the curls of the loops essentially tangent to a second edge of the sheet, opposite to the first.

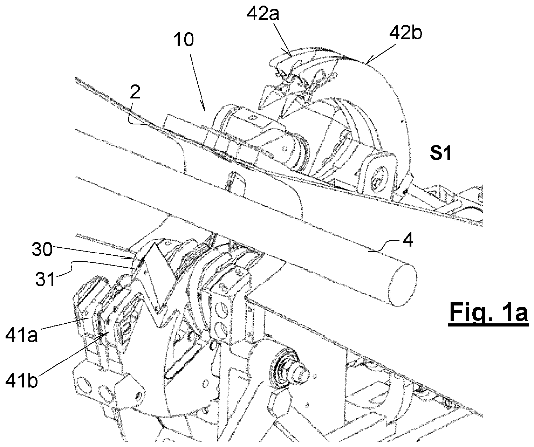

Figures 1a and 1b show a knot-tying device 10 that is part of a machine 100 (see Figure 15) that exemplifies the invention, where this knot-tying device 10 is capable of tying two knots very close to each other on a sausage, using for this purpose a segment of string from the load (not shown in Figures 1a and 1b), specifically a segment that covers two consecutive loops.

The knots tied by the knot-tying device 10 of the machine 100 exemplifying the invention are of the type shown, also only by way of example, in Figure 3.

To this end, the knot-tying device 10 has two knot-tying mechanisms that are simultaneously operable, each capable of tying a knot around a sausage.

As shown in Figure 15, the machine 100 is equipped with supply means 60 for supplying the segment of string 21 that covers two loops and which, in the example, comprise a drive wheel 61 that engages with holes in the flexible sheet on which the store of string is arranged, where with each stroke of the machine, the drive wheel 61 can be operated to move the sheet sufficiently in order to place two consecutive loops of the string 21, each within reach of one of the knot-tying mechanisms of the knot-tying device 10 of the machine 100.

To do so, it will be understood that the consecutive loops of the string 21 are interspaced according to the distance that separates the two knot-tying mechanisms of the knot-tying device 10.

With regard to the knot-tying mechanisms, each knot-tying mechanism comprises a pusher 41a, 41b and a matching fork 42a, 42b, both able to be moved and actuated in order to move between the position shown in Figure 1a and the position shown in Figure 1b.

In the exemplary knot-tying device 10, the pushers 41a, 41b are firmly connected to move in unison. However, it is contemplated that each pusher is linked to its own drive means in order to move in a coordinated manner or to move only one of them.

Likewise, the forks 42a, 42b matching the pushers 41a, 41b may be firmly connected to move in unison or each one may be linked to its own drive means in order to move in a coordinated manner or to move only one of them.

In any case, each pusher and its matching fork are configured to interact and tie a knot, implementing the same technique that is described in patent document ES 0475086.

This technique comprises moving each pusher and its matching fork relative to each other and in a knot-tying sequence from a standby position to an operating position and back to the standby position.

Figures 6 to 11 help to better understand how a knot-tying sequence is carried out, although the depicted parts of the knot-tying mechanisms do not necessarily take the relative positions shown in the drawings.

The knot-tying sequence is as follows.
- Starting from the standby position S1, represented in Figure 1a, the pushers 41a, 41b and the matching forks 42a, 42b leave space for the placement of the sausage 4 to be tied in the arrangement shown in said Figure 1a, which is an arrangement in which the segment of the string (not visible in Figure 1a) to be used for the knots is located between a support surface 2 offered by the machine 100 and the sausage 4.
- From the standby position S1, the drive of each pusher 41a, 41b and its matching fork 42a, 42b towards the operating position S2, represented in Figure 1b, has several effects.

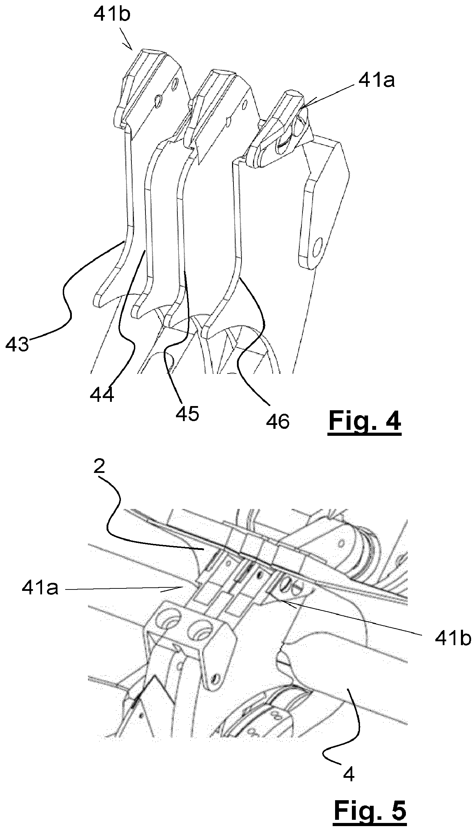

With regard to the pushers, each pusher 41a, 41b when arranged in the position represented in Figure 5, using the support surface 2, gradually causes respective constrictions in the sausage 4, as shown in Figure 6 (in which the pushers have not been precisely represented to show the effect caused on the sausage).

To this end, and as shown in Figure 4 in greater detail, the pushers 41a, 41b comprise sausage tightening means that, in the example, consist of four tightening parts 43, 44, 45, 46 that have respective engaging surfaces configured to gradually gather the sausage casing, emptying the stuffed product when driving the pushers 41a, 41b towards the operating position S2.

The four tightening parts 43, 44, 45, 46 are distributed, as shown in Figure 4, so that two tightening parts 44, 45 are inner parts, in other words, they are located between the forks 42a, 42b, and two tightening parts 43, 46 are outer parts 43, 46, in other words, they are each on an opposite side of the set of forks 42a, 42b, and this is understood to be the case when the pushers and their matching forks take the operating position S2.

Simpler variants of the machine are contemplated, in which the pushers do not comprise tightening means.

In this case, the pushers can leave a gap for the arrangement of the sausage between said pushers and the support surface, or they can be configured to hold down or retain the sausage against said support surface. The first case will require the operator to retain the sausage when the knots are being tied; and in the second case, the operator may be assisted by the pushers for this purpose. In any case, both variants are of interest for tying knots on the same longitudinal segment of empty casing of the sausage, which is already presented in the knot-tying machine with longitudinal segments of empty casing, or sufficiently empty casing, for this purpose. A conventional way to obtain these longitudinal segments of empty casing is by twisting the sausage on itself.

With regard to the forks 42a, 42b, each fork 42a, 42b gradually pulls and places the curl 22a, 22b of a loop of the string around the sausage 4, as shown Figure 7.

When taking the operating position S2, the head of the curl of the loop is transferred from the outer arm of the fork, which pulled the string to surround the sausage, to the inner arm of the fork and surrounding the intersection of the loop on the outside, so that when the pushers and their matching forks are withdrawn back to the standby position that follows the operating position, not only is the head of the curl introduced inside the curl itself but the forks 42a, 42b each pull the head 24a, 24b of the curl of the associated loop, cinching respective knots formed around the sausage 4, each with a protruding bow 25a, 25b, as shown in Figure 10.

Figures 8 and 9 show a manner of carrying out the aforementioned transfer, showing a pusher 41a and its matching fork 42a to do so.

Said transfer can be carried out, only by way of example, as described in patent document ES 0475086.

In this case, the outer arm 421 of the fork 42a mounts a movable claw 71, that is articulated in the example, which pulls the string by hooking the head of the curl of a loop when the fork 42a is driven in the direction of the operating position S2, as shown in Figure 8; and the pusher 41a has a ramp 411 that mechanically interacts with the movable claw 71 to arrange it, by pushing, between two supports 72 that are provided to the inner arm 422 of the fork, so that a movable clip 73 is then driven to first disengage the string of the movable claw 71 and then attach the string by pinching it to close the clip 73 against the supports 72 of the inner arm 422 of the fork 42a, as shown in Figure 9.

The drive mechanisms of both the movable clip 73 and the pushers 41a, 41b and matching forks 42a, 42b of the knot-tying mechanisms of the knot-tying device 10 are not described in detail because they are known and because they do not alter the essence of the invention.

Although it may only be by way of example, the drive mechanisms may be similar to those described in patent document ES 0475086.
- In their movement towards the standby position S3 that follows the operating position S2, or once said standby position S3 has been reached, cutting means are driven.

In the exemplary machine, the cutting means comprise at least a first, a second and a third string cutting tool 32, 33, 34, as shown in Figure 10, and a sausage cutting tool 31, as shown in Figure 11.

In the specific example, the first and second string cutting tools 32, 33 are configured to cut the segment of string between the two tied knots at a first and second point; the third string cutting tool 34 is configured to cut the string at a third point that separates the segment of string used to tie the two knots from the store of continuous string that will be used in a new knot-tying operation; and the sausage cutting tool 31 is configured to cut the sausage at a point located between the first and second cutting points of the string, as shown in Figure 11.

In the case of using a load 22 of string like the load shown or similar to that in Figure 3, advantageously, the loss of string that is determined between the first and the second string cutting points will remain connected to the sheet 26 of the load.

The sausage cutting tool 31 is a type of movable blade 31a that can be moved transversely with respect to the sausage from the pushers, on a first side of the sausage, which works with a static slotted rib 31a located on the opposite side of the sausage, configured to receive the sausage with adjustment to the blade and cutting by shearing.

The invention also contemplates other variants that are not shown. By way of example, the string cutting means may lack a second cutting tool such as the tool mentioned above, the sausage cutting tool being located between the two tied knots and adjacent to the first string cutting tool.

In any case, the knot-tying device 10 is also equipped with a series of hold-down plates which function is to fix the ends of the segment of string used for tying the knots on the sheet 26 of the load 22, while said segment of string is manipulated when the knots are being tied. Preferably, the series of hold-down plates also includes hold-down plates that fix the string at points between the two intersections of the two loops used for tying the knots.

The hold-down plates, in a manner similar to the manner proposed in patent document ES 0475086, can be actuated between a release position, in which they do not interfere with the supply of a new segment of string for tying knots, and a fixing position, which is the position in which they hold down the string for firm securing.

Figures 12a and 12b partially show a second variant of a machine 101 (see Figure 16) according to the invention, which only differs from the first variant of a machine 100 in that it comprises a threading device 50 that can be used to automate the hanging of the tied sausage products.

Figures 12a and 12b show the knot-tying device of the machine 101 in the standby position S3 which follows the operating position, in the final phase of a knot-tying sequence, where said threading device 50 takes two different positions.

Specifically, the threading device 50 has a rod divided into two portions: a fixed rod portion 51 and a movable rod portion 52.

The movable rod portion 52 can be actuated between a standby position V1, shown in Figure 12a, sufficiently separated from the fixed rod portion 51 so as not to interfere with the knot-tying mechanisms of the knot-tying device when tying knots, and a connection position V2, shown in Figure 12b, which connects to the fixed rod portion 51 to give continuity to the rod passing through and threading at least one protruding bow 25a, 25b, in the example the two protruding bows, of the tied knots as it moves towards the connection position V2.

The invention contemplates preparing the machine 101 to be able to choose whether to thread just one or both bows of the recently tied knots.

A simple as well as effective solution is proposed, consisting of placing removable, or interchangeable, separators 55 configured to sufficiently open the protruding bows of the knot or knots to be threaded by the movable rod portion 52 as it moves towards the connection position V2.

Taking advantage of the fact that the support surface of the machine 101 has a slightly curved shape and defines a cantilevered portion 2a with respective slots for the passage therethrough of the forks 42a, 42b of the knot-tying mechanisms towards and from the operating position S2, said separators 55 fit into these slots, as shown in Figure 13.

Figure 14 shows a detail of a separator 55, showing how it has a first and second recess 53, 54 of different depths and intended to receive the support of respective portions of string that extend on each side of the head of a bow when the string is subjected to a certain tension, which occurs when the associated knot is cinched by pulling the corresponding fork of the aforementioned bow. The different depths of the recesses 53, 54 cause the sufficient opening of the bow shown in Figure 13 for the passage therethrough of the movable rod portion 52 as it moves towards the connection position V2, threading the bow.

The fixed rod portion 51 may be connected to a hanging bar to which the sausage products, which knots have a bow that has been threaded, can be easily and quickly transferred.

## Claims

1. A machine (100, 101) for tying sausages that comprises a knot-tying device (10), supply means (60) for supplying a string (21) and cutting means (30), the machine being **characterised in that** the knot-tying device has two simultaneously operable knot-tying mechanisms, each capable of tying a knot around a sausage (4), **in that** the string supply means (60) are operable to provide a segment of string sufficient for tying the two knots, and **in that** the cutting means comprise at least one first string cutting tool (32) configured to cut the segment of string between the two tied knots at a first point.

2. The machine (100, 101) according to claim 1, **characterised in that** it has a support surface (2) for a longitudinal portion of the sausage (4) to be tied and **in that** each knot-tying mechanism comprises a pusher (41a, 41b) and a matching fork (42a, 42b), both able to be moved and actuated in order to move in a sequence from a standby position (S1) to an operating position (S2) and back again to the standby position (S3) and configured to
- in the standby position (S1) that precedes the operating position, leave space for the placement, between the pushers (41a, 41b) and matching forks (42a, 42b), of the sausage (4) to be tied and of the section of string to be used for the knots that is arranged between the support surface and the sausage and forming two loops;
- in the operating position (S2), cause each of the forks (42a, 42b) to pull and place the curl (22a, 22b) of a loop around the sausage (4) and, by interaction with the matching pushers, introduce the head of the curl inside the curl itself, first surrounding the intersection (23a, 23b) of the associated loop; and
- in the standby position (S3) that follows the operating position, each of the forks (42a, 42b) pull from the head (24a, 24b) of the curl of a loop to cinch respective knots formed around the sausage, each with a protruding bow (25a, 25b).

3. The machine (100, 101) according to claim 2, **characterised in that** the pushers (41a, 41b) of the two knot-tying mechanisms of the knot-tying device (10) are firmly connected to move in unison.

4. The machine (100, 101) according to claim 2 or 3, **characterised in that** the pushers (41a, 41b) are configured to retain the sausage product, pressing it against the support surface (2) when the pushers (41a, 41b) take the operating position (S2).

5. The machine (100) according to claim 4, **characterised in that** the pushers (41a, 41b) comprise tightening means for tightening the sausage (4) when the pushers (41a, 41b) take the operating position (S2).

6. The machine (100, 101) according to claim 5, **characterised in that** the tightening means for tightening the sausage (4) comprise tightening parts (43, 44, 45, 46), which travel with the pushers (41a, 41b), which have respective engaging surfaces configured to gradually gather the sausage (4) into contact with said engaging surfaces when the pushers (41a, 41b) are actuated towards their operating position (S2).

7. The machine (100, 101) according to claim 6, **characterised in that** the tightening means comprise a number of four tightening parts (43, 44, 45, 46), two inner ones (44, 45) located between the forks (42a, 42b) and two outer ones (43, 46) each on an opposite side of the set of forks (42a, 42b).

8. The machine (100, 101) according to claim 7, **characterised in that** the engaging surface of the inner tightening parts (44, 45) is different from the engaging surface of the outer tightening parts (43, 46).

9. The machine (101) according to any one of the preceding claims, **characterised in that** it comprises a threading device (50), with a rod divided into two portions, a fixed rod portion (51) and a movable rod portion (52), where the movable rod portion (52) can be actuated between a standby position (V1), sufficiently separated from the fixed rod portion (51) so as not to interfere with the knot-tying mechanisms of the knot-tying device (10) when tying knots, and a connection position (V2), which connects to the fixed rod portion (51) to give continuity to the rod passing through and threading at least one protruding bow (25a, 25b) of the tied knots as it moves towards the connection position (V2).

10. The machine (101) according to claim 9, **characterised in that** the threading device (50) comprises removable separators (55) configured to sufficiently open the protruding bows (25a, 25b) of the knot or knots to be threaded by the movable rod portion (52) as it moves towards the connection position (V2).

11. The machine (101) according to any one of the preceding claims, **characterised in that** the cutting means (30) comprise a second string cutting tool (33) configured to cut the segment of string between the two tied knots at a second point; a third string cutting tool (34) configured to cut the string at a third point that separates the segment of string used for tying the two knots from a store of continuous string; and a sausage cutting tool (31) configured to cut the sausage at a point located between the first and second cutting points of the string.

12. The machine (101) according to any one of claims 1 to 10, **characterised in that** the cutting means (30) comprise a sausage cutting tool (31) at a point located between the two tied knots and adjacent to the first string cutting point by the first cutting tool (32).

13. A system for tying sausages, **characterised in that** it combines a machine (100, 101) according to any one of the preceding claims with a load (22) of string (21) consisting of a flexible sheet (26) or band on which the string is arranged forming consecutive loops interspaced according to the distance that separates the two knot-tying mechanisms of the knot-tying device (10) of the machine.

14. The system according to the preceding claim, **characterised in that** the supply means (60) for supplying string (21) of the machine (100, 101) comprise a drive wheel (61) that engages with the sheet (26) of the load (22) of string (21) forming loops, the drive wheel (61) being operable with each stroke of the machine sufficiently to place a longitudinal portion of sheet (26) with a segment of string that contains two consecutive loops.
